# EUROPEAN PATENT APPLICATION

(11) **EP 2 636 360 A1**
(43) Date of publication of application: **11.09.2013**
(21) Application number: 12158726.5
(22) Date of filing: 09.03.2012
(51) Int. Cl.: A61B 3/113, A61H 5/00, A61B 3/08

(54) **A system and method for adjusting and presenting stereoscopic content**

(71) Applicant: Danmarks Tekniske Universitet, 2800 Lyngby (DK)
(72) Inventor: Bohr, Jakob, 2100 Copenhagen Ø (DK); Olsen, Kasper, 2500 Valby (DK)
(74) Representative: Plougmann & Vingtoft A/S

(57) **Abstract**

This invention relates to a system for and a method of adjusting and presenting stereoscopic content (100), the method comprising presenting stereoscopic content (100) to a user, where the stereoscopic content (100) comprises a first image part (101) intended to be viewed by one eye of the user and a second image part (102) intended to be viewed by the other eye of the user, wherein the presented stereoscopic content (100) has been adjusted by rotating the first image part (101) and the second image part (102) in relation to each other according to an adjustment parameter (Θ_{A}) derived on the basis of one or more vision specific parameters (Θₘ, Θ_{MAX}, Θ_{MIN}, ΔΘ) indicating abnormal vision for the user.

In this way, presenting stereoscopic content is enabled that is adjusted specifically to the given person. This may e.g. be used for training purposes or for improved stereoscopic viewing.

## Description

### FIELD OF THE INVENTION

The present invention relates to a method of and system for modifying and presenting stereoscopic content. More specifically, the present invention relates to a method of and system for adjusting and presenting stereoscopic content, where the stereoscopic content comprises a first image part intended to be viewed by one eye of the user and a second image part intended to be viewed by the other eye of the user.

### BACKGROUND OF THE INVENTION

Binocular vision is normally an important part of a person's daily life.

Certain types of abnormal vision may go undetected and sometimes the effect is explained as being caused by something else entirely. Causes for persons, e.g. children, with e.g. learning disabilities such as dyslexia and/or various attention difficulties may e.g. be contributed to something else when it actually in some cases may be caused by abnormal vision.

Persons who easily can see 3D images of single-image stereograms typically have torsionally well aligned eyes, i.e. a torsional alignment is maintained even when the lines of sight of each individual eye of a person drift apart to a certain degree, intentionally or not. The extent of this capability varies from person to person and normally within certain boundaries. In a similar way, people that easily can fuse a two-part or two-image stereoscopic image or other images into a single (3D) image typically also have torsionally well aligned eyes.

By torsionally well aligned eyes is to be understood a set of two eyes where their relative torsional alignment is sufficiently good that fusion of a two-part or two-image stereoscopic image into a single image is readily obtained. The absolute alignment of the individual eyes are likely to be within a few degrees, as e.g. has been demonstrated in studies dealing with the perception of vertical. See e.g. Svekersten U, Ygge J, Pansell T, Drift of visually induced optostatic torsion, Strabismus 17 82 - 89 (2009).

On the other hand, persons who experience difficulties seeing 3D images from stereoscopic content like stereograms (both "mono-stereograms" using black and white or coloured patterns and stereograms having a separate image for each eye), stereoscopic images, etc., or are unable to see them at all, may have more abnormal ocular torsional properties e.g. indicative of abnormal vision. They may e.g. have a larger adaptive range, i.e. a larger range where they can fuse a stereoscopic image, and/or e.g. a clockwise/counterclockwise asymmetry, i.e. the torsional rotation of the right eye versus the left eye is either clockwise or counterclockwise as a relative measure between them.

Furthermore, people with abnormal vision may not be able to view stereoscopic content properly or e.g. then at least potentially with increased discomfort, e.g. like getting tired, straining their eyes or even getting a headache.

Patent specification US 5,088,810 discloses a vision training system both for testing and training where testing for fusion ranges using coloured lenses and random dot stereograms is mentioned.

There is a need for a simple and efficient stereoscopic content adjustment and presentation method and system.

Furthermore, there is a need for an efficient and/or convenient vision training method and system to improve abnormal vision under some circumstances.

### OBJECT AND SUMMARY OF THE INVENTION

It is an object to provide a method and a system for adjusting stereoscopic content.

Another object is to provide a method and a system for efficient and/or convenient stereoscopic presentation and/or vision training that allows for self-training.

According to one aspect, one or more of these objects are achieved at least to an extent by a method of adjusting and presenting stereoscopic content, the method comprising presenting stereoscopic content to a user, where the stereoscopic content comprises a first image part intended to be viewed by one eye of the user and a second image part intended to be viewed by the other eye of the user, wherein the presented stereoscopic content has been adjusted by rotating the first image part and the second image part in relation to each other according to an adjustment parameter derived on the basis of one or more vision specific parameters indicating abnormal vision for the user.

In this way, presenting stereoscopic content is enabled that is adjusted specifically to the given person. This may e.g. be used for training purposes or for improved stereoscopic viewing.

Furthermore, this is enabled in an easy and efficient manner.

In one embodiment, the one or more vision specific parameters comprises one or more parameters selected from the group consisting of:
- a maximum rotation angle for which the user is able to fuse the first and second image part of an item of stereoscopic content into substantially a single image,
- a minimum rotation angle for which the user is able to fuse the first and second image part of an item of stereoscopic content into substantially a single image,
- a fusion range derived based on the difference between the maximum rotation angle and the minimum rotation angle, and
- a mean value of the maximum rotation angle and the minimum rotation angle.

In one embodiment, determining the maximum rotation angle comprises
- presenting a series of items of stereoscopic content, wherein each successively presented stereoscopic content has an increased rotation angle and stopping once the user no longer is able to fuse the first and second image part of an item of stereoscopic content into substantially a single image,
and/or wherein determining the minimum rotation angle comprises
- presenting a series of items of stereoscopic content, wherein each successively presented stereoscopic content has an decreased rotation angle and stopping once the user no longer is able to fuse the first and second image part of an item of stereoscopic content into substantially a single image.

In one embodiment, the one or more vision specific parameters is the mean value of the maximum rotation angle and the minimum rotation angle and wherein the adjustment parameter Θ_{A} is substantially equal to the mean value.

In one embodiment, the one or more vision specific parameters is the mean value of the maximum rotation angle and the minimum rotation angle and wherein the adjustment parameter is set to a value being less than the mean value, e.g. at 75% - 80% or other amounts of the mean value, thereby training the eyes of the user during presentation of the adjusted stereoscopic content.

In one embodiment, the one or more vision specific parameters is the mean value of the maximum rotation angle and the minimum rotation angle and wherein the adjustment parameter is set to be about the mean value, wherein
- the adjustment parameter during presentation of the adjusted stereoscopic content is changed gradually or in steps towards zero until a predetermined end value is reached,
- the adjustment parameter during presentation of the adjusted stereoscopic content is changed gradually or in steps until it is about zero degrees, or
- the adjustment parameter during presentation of the adjusted stereoscopic content is changed gradually or in steps until it is past zero degrees by a predetermined amount of degrees.

In one embodiment, the stereoscopic content is a digital movie and the adjustment of stereoscopic content is carried out during or after normal 3D decoding or conversion of a 2D movie into a 3D movie and before the stereoscopic content is presented to the user.

In one embodiment, the method is provided for by a downloadable application.

According to the another aspect, the invention also relates to a system for adjusting and presenting stereoscopic content, the system comprising one or more processing units adapted to present stereoscopic content to a user, where the stereoscopic content comprises a first image part intended to be viewed by one eye of the user and a second image part intended to be viewed by the other eye of the user, wherein the one or more processing units is further adapted to adjust the stereoscopic content for presentation by rotating the first image part and the second image part in relation to each other according to an adjustment parameter derived on the basis of one or more vision specific parameters indicating abnormal vision for the user.

The system and embodiments thereof correspond to the method and embodiments thereof and have the same advantages for the same reasons.

### BRIEF DESCRIPTION OF THE DRAWINGS

These and other aspects will be apparent from and elucidated with reference to the illustrative embodiments as shown in the drawings, in which:
Figures 1 a and 1 b schematically illustrate two simple examples of stereoscopic content;
Figures 2a - 2e schematically illustrate vision specific parameters obtained from a group of persons;
Figure 3 schematically illustrates one embodiment of a stereoscopic content adjustment and presentation method according to the present invention; and
Figure 4 schematically illustrates one embodiment of a stereoscopic content adjustment and presentation system.

### DESCRIPTION OF PREFERRED EMBODIMENTS

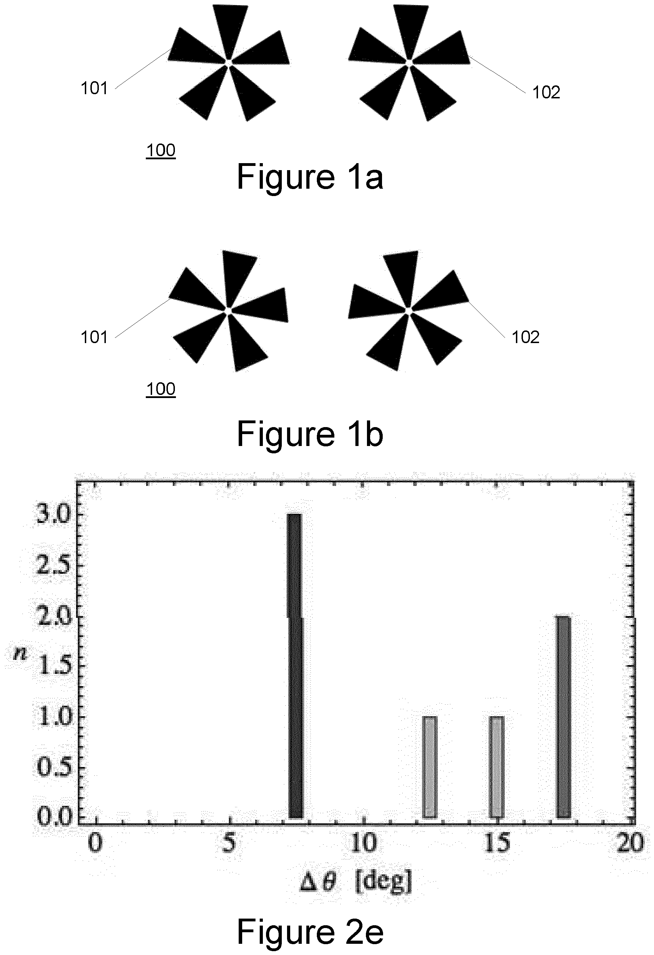

Figures 1 a and 1 b schematically illustrate two simple examples of stereoscopic content. Shown in each figure is stereoscopic content (100) in the form of a stereoscopic image 100 comprising a left part or image 101 intended to be viewed by the left eye and a right part or image 102 intended to be viewed by the right eye.

When viewing stereoscopic content 100, people without certain types of abnormal vision are able to fuse the two separate images or parts into a single image and obtaining binocular vision with a depth perception or depth impression typically referred to as stereopsis.

The stereoscopic content 100 in Figure 1 a and 1 b each comprises two copies of the same image that in this particular example are substantially circular.

In Figure 1a, the two copies of the same image are not rotated relative to each other, i.e. rotated by 0°. In Figure 1b however, the two copies of the same image are rotated relative to each other. In the shown example, the two copies are rotated relatively to each other by -20°; specifically for the shown example by + 10° (for the left image for an observer looking at the figure on a screen or piece of paper) and -10° (for the right image for an observer looking at the figure) relative to the two corresponding (left and right respectively) images of Figure 1a. (+10°; -10°) is one example of rotating them relative to each other by - 20°. Other examples could e.g. be (+20°; 0°), (0°; -20°), (+5°; -15°), (+3°; -17°) and so on.

That the two copies are rotated relatively to each other by -20° signify, given the used notation or terminology, that the upper parts are rotated towards each other (left image is rotated clockwise relative to the right image for an observer looking at the figure; right image is rotated counterclockwise relative to the left image for an observer looking at the figure), while a rotation of 20°, given the used notation or terminology, would signify that the upper parts are rotated away from each other (left image is rotated counterclockwise relative to the right image; right image is rotated clockwise relative to the left image for an observer looking at the figure). Most people will not normally be able to successfully fuse the two objects in Figure 1b to form a single image since the absolute value of their relative rotation is too large for many people.

The translational displacement or distance between the two copies is the same in Figures 1 a and 1 b.

From such stereoscopic content, various useful parameters may be derived that represent different aspects of whether a given user has abnormal vision or not and to what extent.

One such parameter is e.g. a maximum rotation angle for which a given user successfully can fuse the stereoscopic content when the left and right image of the stereoscopic image is rotated away from each other. Throughout the text, this maximum rotation angle is denoted maximum rotation angle (Θ_{MAX}).

The maximum rotation angle (Θ_{MAX}) is - with this definition - normally positive but can in certain cases be negative or in principle zero.

Another such parameter is e.g. a minimum rotation angle for which a given user successfully can fuse the stereoscopic content when the left and right image of the stereoscopic image is rotated towards each other. Throughout the text, this minimum rotation angle is denoted minimum rotation angle (Θ_{MIN}).

The minimum rotation angle (Θ_{MIN}) is - with this definition - normally negative but can in certain cases be positive or in principle zero.

If the maximum rotation angle (Θ_{MAX}) is below zero and/or if the minimum rotation angle (Θ_{MIN}) is above zero for a given user then there is no normal fusion possible at or close to a rotation of zero degrees between a left and a right image or part of a stereoscopic image, i.e. there is no normal binocular vision.

These parameters for a given user are normally easily obtainable unless certain vision defects interfere, e.g. like strabismus and amblyopia.

A further parameter that may be derived is e.g. a mean value Θₘ of the maximum and minimum rotation angles (Θ_{MAX}; Θ_{MIN}), i.e. (Θ_{MAX}+Θ_{MIN})/2. A mean value Θₘ close to 0° has been shown to indicate good concord between the eyes, and this parameter - when being different from 0° by more than a predetermined amount, e.g. a few degrees, - is normally a good indicator for abnormal vision.

The mean value Θₘ is a direct representation of angular torsion asymmetry and a value significantly different from zero indicates asymmetry and therefore misalignment between the eyes of a user.

Furthermore, from the maximum and minimum rotation angles (Θ_{MAX}; Θ _{MIN}), a fusion range (denoted ΔΘ) for which fusion may be derived by determining the distance between them simply by subtracting them, i.e. ΔΘ = Θ _{MAX} - Θ _{MIN}.

The fusion range ΔΘ is another parameter that may be used in order to determine whether a given person has abnormal vision or not.

A larger fusion range ΔΘ may be indicative of a person with abnormal ocular torsional properties and a person with normal vision may typically have a fusion range ΔΘ in the order of about 5° to about 10° while a fusion range ΔΘ above about 5° to about 10° may indicate poor ability for alignment e.g. depending on other parameters. For example, a fusion range ΔΘ above about 10° may not be an issue if Θₘ is zero or close to zero while a fusion range ΔΘ of about 10° could be an issue if Θₘ is about 5°.

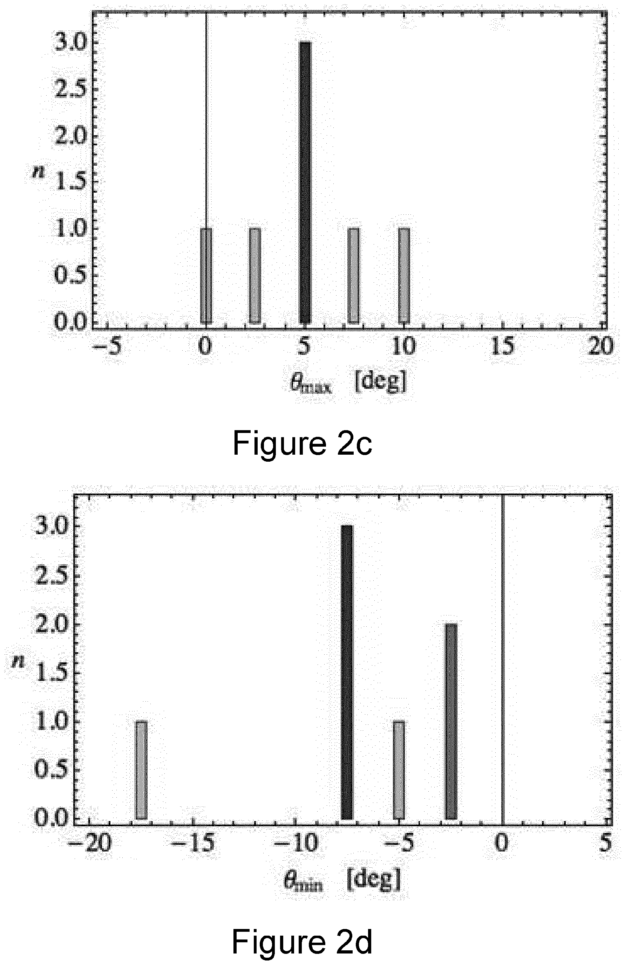

As another indicator for abnormal vision, it may suffice to use only one of either the maximum or minimum rotation angles (Θ_{MAX}; Θ_{MIN}). Preferably, the minimum rotation angle (Θ_{MIN}) is used, as this may be a stronger indicator than the maximum rotation angle (Θ_{MAX}) for physiological reasons as also indicated by comparing Figures 2c and 2d, which will be explained in greater detail in the following. Comparing Figures 2c and 2d it is seen that the maximum rotation angle (Θ_{MAX}) is somewhat normally distributed (even given the low number of observations) while the minimum rotation angle (Θ_{MIN}) has another kind of distribution with one value deviating significantly from the rest. The maximum rotation angles (Θ_{MAX}) vary within 0° and 10° while the minimum rotation angles (Θ_{MiN}) mostly vary within 0° and - 10° except for a single value being much lower.

The maximum and minimum rotation angles (Θ_{MAX}; Θ_{MiN}) and derived parameters may e.g. be determined for a given user by being presented with a series of stereoscopic pictures, e.g. like the ones shown in Figures 1a and 1b or alternatively other suitable stereoscopic or 3D content, where the relative rotation between them is changed with each additional stereoscopic picture in the series.

This is continued until both the maximum rotation and the minimum rotation angles have been registered. The maximum rotation angle may very well - and often will - be different from the absolute value of the minimum rotation angle for a given person.

The determination of maximum and minimum rotation angles (Θ_{MAX}; Θ_{MIN}) may e.g. be done using stereoscopic images printed on paper (or even stereoscopic images displayed on a screen). However, some persons may not be able to fuse any stereoscopic images at all due to having a lack of control of focus and independent direction of the two lines of sight not necessarily contributed to abnormal vision. This may be avoided by using commercially available 3D or stereo vision goggles, video headsets, sight testing equipment, and/or the like, or any other equipment that ensures that the left part or image and the right part or image of the stereoscopic image is viewed only by the left and the right eye, respectively.

Alternatively the maximum and minimum rotation angles (Θ_{MAX}; Θ_{MIN}) may be determined by other suitable ways.

It is to be understood that the particular stereoscopic content may be different from the ones actually shown. What is significant is that each part or image (left and right) of the stereoscopic image is rotated in relation to each other (with a special case for zero rotation).

It is also to be understood that the stereoscopic content presented to a user need not be still images but could be series of stereoscopic images or a stereoscopic movie. One could e.g. use a 3D movie or other content but also any traditional 2D movie or other content converted into stereoscopic content. Conversion of 2D content into 3D content is readily available and e.g. already implemented in most standard 3D television sets.

So a small, or zero, value of Θₘ and/or a small, or zero, value of the fusion range ΔΘ may indicate good concord between the eyes, while higher numerical values for Θₘ and/or ΔΘ may indicate abnormal vision.

Furthermore, it may also be possible to determine a potential or likely disorder or a group of potential or likely disorders from the actual values of Θₘ and/or ΔΘ (e.g. together with further parameters) as different disorders may result in different sets of values for these parameters.

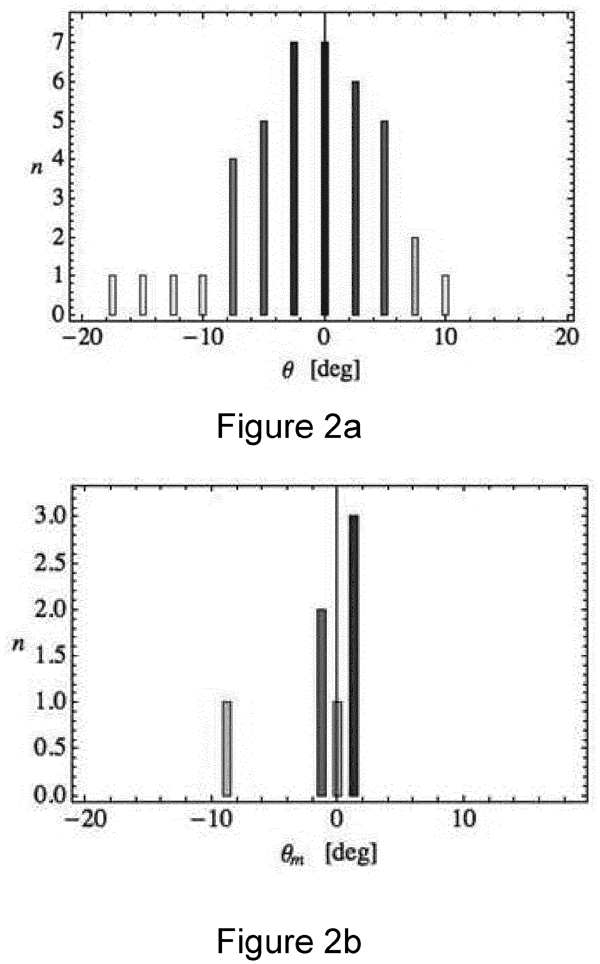

Figures 2a - 2e schematically illustrate such actual parameters obtained from a group of persons.

Shown in Figure 2a is obtained data from a group of seven people being shown a manual presentation of stereoscopic content in the form of a series of stereoscopic pictures with different rotation angles Θ. The group was initially larger but some could not fuse an image at all, even with no rotation. Each individual person was shown a series of stereoscopic images with numerically increasing rotation between them, alternating between maximum and minimum rotations, and it was recorded whether the person for a given rotation angle Θ could fuse the image or not. The increased and decreased rotation were done in steps of 2.5° but could also have been done in steps of other magnitudes or even gradually. It could also be that the steps were a certain amount at one range while being another amount at another range.

Figure 2a illustrates this data for all seven people where the x-axis indicate the rotation angle Θ and the y-axis is the number of people that successfully could fuse the image at the particular rotation angle Θ.

As can be seen from Figure 2a, all seven people could fuse with no rotation/the rotation angle Θ being zero and all seven people were also able to fuse the stereoscopic image with a rotation angle Θ being - 2.5°. Additionally, five people were able to fuse at -5.0°; four people at - 7.5°; a single person at - 10.0°, - 12.5°, - 15.0°, and - 17.5°; six people at 2.5°; five people at 5.0°; two people at 7.5°; and a single person at 10°.

As can be seen, in this particular test data, the observations are in the range of - 17.5° to 10°.

Figure 2b illustrates a histogram showing the mean value Θₘ (x-axis) and the number (y-axis) of people that had the particular mean value Θₘ.

As shown, most people (six persons) had a mean value Θₘ of around 0° (one had 0°; three had 1.25°; and two had - 1.25°), while a single person had a mean value Θₘ of - 8.75° (being the person who had a maximum rotation angle of - 17.5° in Figure 2a).

The average of the mean value Θₘ of the whole group of seven people is - 1.1°.

Figures 2c and 2d show the maximum and minimum rotation angles (Θ_{MAX}; Θ_{MIN}), respectively, and the number people having that particular maximum and minimum rotation angles (Θ_{MAX;} Θ_{MIN}).

The average of all the maximum rotation angles (Θ_{MAX}) is 5.0° and the average of all the minimum rotation angles (Θ_{MIN}) is - 7.1°.

It can e.g. be seen that one person has Θ_{MIN} being - 17.5° and two persons have a Θ_{MIN} being - 2.5°.

From the maximum and minimum rotation angles (Θ_{MAX}; Θ_{MIN}) of each person, the fusion range ΔΘ can be derived, e.g. as explained earlier. The resulting fusion ranges ΔΘ are shown in Figure 2e. As can be seen, three persons have ΔΘ of 7.5°, one person has ΔΘ of 12.5°, one person has ΔΘ of 15°, while two persons have ΔΘ of 17.5°.

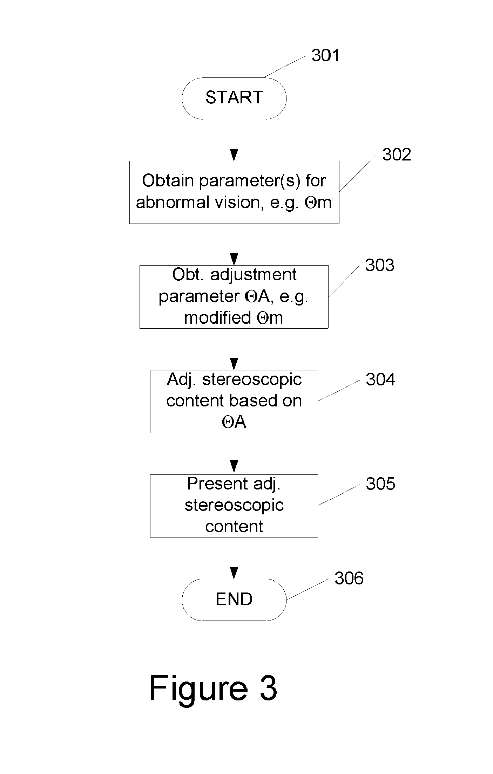

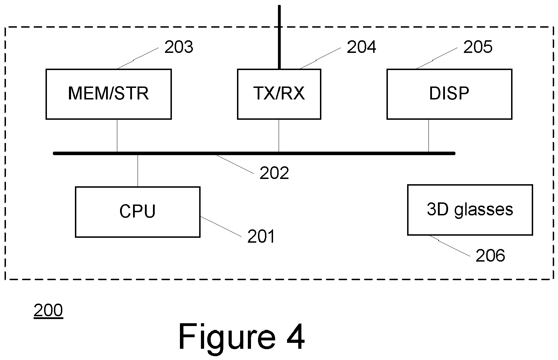

One person of the group (the one having Θₘ of - 8.75°) has according to these parameters an abnormal vision and could benefit from being presented with adjusted stereoscopic content adjusted specifically to the given user and/or e.g. receive training as shown and explained in connection with Figures 3 and 4.

It is to be understood, that the actual precise values of these parameters are influenced by the used increment of rotation angles (being 2.5° in this particular example) and/or determination method. However, the overall distribution of values (for these people) would quantitively be the same.

According to the present invention, presentation of stereoscopic content to a person having abnormal vision according to the present context (e.g. Θₘ being substantially different (in either direction) from zero, e.g. larger than about 4°, and/or e.g. ΔΘ being larger than 5° - 10° under certain circumstances) is adjusted in accordance with one or more vision specific parameters, as will be explained in further detail in the following.

Figure 3 schematically illustrates one embodiment of a stereoscopic content adjustment and presentation method according to the present invention. The stereoscopic content adjustment and presentation method may e.g. be used for vision training or for presenting stereoscopic content adjusted specifically to the given person so the person is able to experience stereoscopic content e.g. with reduced discomfort or none at all.

The method initiates at step 301 and proceeds to step 302 where one or more vision specific parameters are obtained indicating abnormal vision e.g. like the mean value Θₘ, the maximum and/or minimum rotation angles (Θ_{MAX}; Θ_{MIN}), and/or the fusion range ΔΘ value. Preferably, the mean value Θₘ is obtained but alternatively it could also be the minimum rotation angle (Θ_{MIN}).

These one or more vision specific parameters may e.g. be determined as described earlier. In the following, the mean value Θₘ is used as an example.

Next, step 303 is carried out where an adjustment parameter Θ_{A} is derived on the basis of the vision specific parameter(s)/the mean value Θₘ. In one embodiment, the adjustment parameter Θ_{A} is selected to be close to the mean value Θₘ depending on the use.

As one example for vision training, Θ_{A} may be set to about 0.75 - 0.80 times Θₘ. This is set below but not too far below Θₘ so that the user can train the eyes gradually bringing their Θₘ value towards or at least closer to zero e.g. over several training sessions or during a single session where Θ_{A} is either continuously, or stepwise, moved in the direction towards zero. Alternatively, Θ_{A} may be set to other values than about 75% - 80% and may even be set at or substantially at Θₘ if the angle during training is changed all the way towards zero or towards zero and ending at a predetermined end value.

As one example for experiencing stereoscopic content adjusted specifically to compensate for the user's actual vision characteristic(s), Θ_{A} may be set to be closer, or even substantially equal to, Θₘ as this fits better with the user's current vision thereby enabling a user to have an improved 3D experience.

After this, the method proceeds to step 304 where stereoscopic content is adjusted in accordance with the adjustment parameter Θ_{A}- The stereoscopic content may e.g. be still images, e.g. of the type shown in Figures 1 a and 1 b, or stereoscopic movie content like 3D movies, or even traditional 2D movies or content, i.e. non-stereoscopic content, converted into 3D movies or content.

The stereoscopic content may be adjusted in advance or preferably 'on the fly'.

Adjusting 'on the fly' has the advantage, e.g. for training purposes, that the user can view content of their own choice and liking and content that the person would use anyway. This is especially advantageous for children as they e.g. then may receive training viewing their normal content.

For presenting stereoscopic content adjusted specifically to a given person, adjusting 'on the fly' also has advantages since the person's entire content library does not need to be processed and stored before use.

The 3D content - or 2D content being converted into 3D - may e.g. be a TV program, a movie, a lecture by a teacher (e.g. if training children in school), a cartoon (e.g. if training a smaller child), a sports event, a video game, etc.

The adjustment may be done as a post-processing step after the stereoscopic content is decoded or converted traditionally but before the content is displayed.

The adjustment may simply be made by rotating the two individual images of the stereoscopic content in accordance with Θ_{A}.

As one example, if Θₘ is 5° and Θ_{A} is 4°, the two individual images are rotated 4° in relation to each other, e.g by rotating one image 2° and the other -2°. As another example, if Θₘ is -5° and Θ_{A} is -4°, the two individual images are rotated -4° relative to each other, e.g. by rotating one image -2° and the other 2°.

At step 305, the adjusted stereoscopic content is presented to the user. As mentioned, the presentation may e.g. be showing stereoscopic images or movie on a 3D display e.g. in connection with 3D glasses, but not necessarily so as a TV having 3D capabilities not requiring 3D glasses (sometimes referred to as autostereoscopic display) could be used.

It is to be understood that steps 304 and 305 may be done concurrently, i.e. a part of the stereoscopic content, like a movie, is decoded as normal and then adjusted and presented after which the next part of the content is adjusted and presented, etc.

After the presentation is done (may not necessarily last the entire playback time of the content) the most recent used Θ_{A} value may be stored for the next session and the method ends at step 306.

In another embodiment for training, the adjustment parameter Θ_{A} may be changed gradually or in steps during the presentation of the stereoscopic content or a part thereof. E.g. Θ_{A} could be 10° in the beginning and be 8° as an end value. The next training session could then start with 9° in the beginning and 7° at the end thereby giving the eyes more and better time to be trained and so on until Θ_{A} was 0° or close thereto. It may be useful to repeat a couple of training sessions before decreasing the angle, e.g. 4 sessions with 10° in the beginning and 8° at the end before proceeding with starting with 9° in the beginning and 7° at the end, to give the eyes even more time to fully adjust.

Alternatively, the adjustment parameter Θ_{A} may be changed gradually or in steps from its initial value all the way to zero. The next training session could then be started at a lower value than the initial value and so on.

In a further alternative, the adjustment parameter Θ_{A} may be changed gradually or in steps from its initial value all the way past zero to a small degree, e.g. from 10° past zero to - 2° or from -10° past zero to 2°. It may be beneficial to train the eyes a bit 'too far' past zero by a small amount.

The specific selection of the adjustment parameter Θ_{A} and/or the end value for the angle during a training session may be selected individually to a given person and/or taking into account the severity of the difficulty in obtaining fusion for the given person.

In a further embodiment, especially for user's with a so-called 'lazy' eye problem and e.g. using a video headset having a separate display for each eye, the light intensity of the picture shown to the lazy eye could be reduced or lower than the light intensity of the picture being shown to the non-lazy eye, which would train the lazy eye specifically for this purpose as well.

In this way, adjustment of stereoscopic content is provided that takes into account the user's individual vision parameters e.g. for improved 3D perception or for training purposes.

The adjustment process may also be used for other purposes.

Figure 4 schematically illustrates one embodiment of a stereoscopic content adjustment and presentation system. Shown is a stereoscopic content adjustment and presentation system 200 comprising at least one processing unit 201 connected via one or more communications and/or data buses 201 to a memory and/or storage 203, optional communications elements 204 e.g. for communicating via a network, the Internet, a Wi-Fi connection, and/or the like, and a display 205. The system 200 may be a more or less standard computational system, like a PC, laptop, smartphone, TV, tablet, etc. but suitably programmed to carry out the method or procedure as described in the various embodiments throughout the specification and variations thereof.

The program may e.g. be a downloadable app, applet or application e.g. an IOS or Android app. It could also be an applet for so-called smart 3D TVs already now having extensive capabilities of running various apps or programs. This enables the user to train or receive an improved 3D experience at home or when being mobile and when the user chooses to do so. The vision system 200 may also be an ophthalmic system or other professional equipment.

The display 205 may e.g. be a normal 2D display or more preferably a display able to produce stereoscopic content viewable e.g. using standard 3D glasses or similar 206. The display 205 may also be a video headset or the like or a standard display showing the stereoscopic content in a more traditional way. Furthermore, the display 205 may be a 3D display not requiring 3D glasses.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to advantage.

It will be apparent to a person skilled in the art that the various embodiments of the invention as disclosed and/or elements thereof can be combined without departing from the scope of the invention.

## Claims

1. A method of adjusting and presenting stereoscopic content (100), the method comprising
- presenting stereoscopic content (100) to a user, where the stereoscopic content (100) comprises a first image part (101) intended to be viewed by one eye of the user and a second image part (102) intended to be viewed by the other eye of the user,
wherein the presented stereoscopic content (100) has been adjusted by rotating the first image part (101) and the second image part (102) in relation to each other according to an adjustment parameter (Θ_{A}) derived on the basis of one or more vision specific parameters (Θₘ, Θ_{MAX}, Θ_{MIN}, ΔΘ) indicating abnormal vision for the user.

2. The method according to claim 1, wherein the one or more vision specific parameters comprises one or more parameters selected from the group consisting of:
- a maximum rotation angle (Θ_{MAX}) for which the user is able to fuse the first and second image part (101; 102) of an item of stereoscopic content into substantially a single image,
- a minimum rotation angle (Θ_{MIN}) for which the user is able to fuse the first and second image part (101; 102) of an item of stereoscopic content into substantially a single image,
- a fusion range (ΔΘ) derived based on the difference between the maximum rotation angle (Θ_{MAX}) and the minimum rotation angle (Θ_{MIN}), and
- a mean value (Θₘ) of the maximum rotation angle (Θ_{MAX}) and the minimum rotation angle (Θ_{MIN}).

3. The method according to claim 2, wherein determining the maximum rotation angle (Θ_{MAX}) comprises
- presenting a series of items of stereoscopic content (100), wherein each successively presented stereoscopic content (100) has an increased rotation angle and stopping once the user no longer is able to fuse the first and second image part (101; 102) of an item of stereoscopic content into substantially a single image,
and/or wherein determining the minimum rotation angle (Θ_{MIN}) comprises
- presenting a series of items of stereoscopic content (100), wherein each successively presented stereoscopic content (100) has an decreased rotation angle and stopping once the user no longer is able to fuse the first and second image part (101; 102) of an item of stereoscopic content into substantially a single image.

4. The method according to any one of claims 2 - 3, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MIN}) and wherein the adjustment parameter (Θ_{A}) is substantially equal to the mean value (Θₘ).

5. The method according to any one of claims 2 - 3, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MI!N}) and wherein the adjustment parameter (Θ_{A}) is set to a value being less than the mean value (Θₘ), e.g. at 75% - 80% of the mean value (Θₘ), thereby training the eyes of the user during presentation of the adjusted stereoscopic content.

6. The method according to any one of claims 2 - 3, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MIN}) and wherein the adjustment parameter Θ_{A} is set to be about the mean value (Θₘ), wherein
- the adjustment parameter (Θ_{A}) during presentation of the adjusted stereoscopic content (100) is changed gradually or in steps towards zero until a predetermined end value is reached,
- the adjustment parameter (Θ_{A}) during presentation of the adjusted stereoscopic content (100) is changed gradually or in steps until it is about zero degrees, or
- the adjustment parameter (Θ_{A}) during presentation of the adjusted stereoscopic content (100) is changed gradually or in steps until it is past zero degrees by a predetermined amount of degrees.

7. The method according to any one of claims 1 - 6, wherein the stereoscopic content (100) is a digital movie and the adjustment of stereoscopic content (100) is carried out during or after normal 3D decoding or conversion of a 2D movie into a 3D movie and before the stereoscopic content (100) is presented to the user.

8. The method according to any one of claims 1 - 7, wherein the method is provided for by a downloadable application.

9. A system (200) for adjusting and presenting stereoscopic content (100), the system (200) comprising
- one or more processing units (201) adapted to present stereoscopic content (100) to a user, where the stereoscopic content (100) comprises a first image part (101) intended to be viewed by one eye of the user and a second image part (102) intended to be viewed by the other eye of the user,
wherein the one or more processing units (201) is further adapted to adjust the stereoscopic content (100) for presentation by rotating the first image part (101) and the second image part (102) in relation to each other according to an adjustment parameter (Θ_{A}) derived on the basis of one or more vision specific parameters (Θₘ, Θ_{MAX}, Θ_{MIN}, ΔΘ) indicating abnormal vision for the user.

10. The system according to claim 9, wherein the one or more vision specific parameters comprises one or more parameters selected from the group consisting of:
- a maximum rotation angle (Θ_{MAX}) for which the user is able to fuse the first and second image part (101; 102) of an item of stereoscopic content into substantially a single image,
- a minimum rotation angle (Θ_{MIN}) for which the user is able to fuse the first and second image part (101; 102) of an item of stereoscopic content into substantially a single image,
- a fusion range (ΔΘ) derived based on the difference between the maximum rotation angle (Θ_{MAX}) and the minimum rotation angle (Θ_{MIN}), and
- a mean value (Θₘ) of the maximum rotation angle (Θ_{MAX}) and the minimum rotation angle (Θ_{MIN}).

11. The system according to claim 10, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MIN}) and wherein the adjustment parameter (Θ_{A}) is substantially equal to the mean value (Θₘ).

12. The system according claim 10, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MIN}) and wherein the adjustment parameter (Θ_{A}) is set to a value being less than the mean value (Θₘ), e.g. at 75% - 80% of the mean value (Θₘ), thereby training the eyes of the user during presentation of the adjusted stereoscopic content.

13. The system according to claim 10, wherein the one or more vision specific parameters (Θₘ, Θ_{MAX}, Θ_{MIN}, ΔΘ) is the mean value (Θₘ) of the maximum rotation angle (Θ_{MAX}) and the minimum rotation angle (Θ_{MIN}) and wherein the adjustment parameter Θ_{A} is set to be about the mean value (Θₘ), wherein the one or more processing units (201) is adapted to
- change, gradually or in steps, the adjustment parameter (Θ_{A}) during presentation of the adjusted stereoscopic content (100) towards zero until a predetermined end value is reached,
- change, gradually or in steps, the adjustment parameter (Θ_{A}) during presentation of the adjusted stereoscopic content (100) until it is about zero degrees, or
- change, gradually or in steps, the adjustment parameter (Θ_{A}) during presentation of the adjusted stereoscopic content (100) until it is past zero degrees by a predetermined amount of degrees.

14. The system according to any one of claims 9 - 13, wherein the stereoscopic content (100) is a digital movie and the adjustment of stereoscopic content (100) is carried out during or after normal 3D decoding or conversion of a 2D movie into a 3D movie and before the stereoscopic content (100) is presented to the user.

15. The system according to any one of claims 9 - 14, wherein the method is provided for by a downloadable application.
